# EUROPÄISCHE PATENTANMELDUNG

(11) **EP 0 584 426 A1**
(43) Veröffentlichungstag der Anmeldung: **02.03.1994**
(21) Anmeldenummer: 92810577.4
(22) Anmeldetag: 28.07.1992
(51) Int. Cl.: G01D 5/14, G01D 5/16, G01D 3/04

(54) **Analoger Weggeber**

(71) Anmelder: HCB, HONEYWELL CENTRA BÜRKLE AG, CH-3052 Zollikofen (CH)
(72) Erfinder: Dierauer,Peter, CH-3113 Rubigen (CH); Boss,Walter, CH-2562 Port (CH)
(74) Vertreter: Fischer, Franz Josef

(57) **Zusammenfassung**

Der analoge Weggeber weist ein Joch (3), bestehend aus zwei U-förmigen Teiljochs (4, 5) auf. Zwischen je einer ersten Stirnfläche (19, 20) der beiden Teiljochs (4, 5) ist ein Dauermagnet (1) angeordnet. Zwischen je einer zweiten Stirnfläche (21, 22) der beiden Teiljochs (4, 5) ist ein Luftspalt (6) vorhanden, der von Kraftlinien (2), die vom Dauermagneten (1) erzeugt sind, durchflutet wird. Ein Wegmessstück (9) ist etwa rechtwinklig zu den Kraftlinien (2) durch den Luftspalt (6) hindurch verschiebbar angeordnet. Das Wegmessstück (9) ist als stabförmiger und bezüglich seiner Längsachse rotationssymmetrischer Bauteil ausgeführt und enthält einen Bereich (10), der von einem Bereichsanfang (11) bis zu einem Bereichsende (12) ragt, und der eine im wesentlichen stetig zunehmende Querschnittsfläche aufweist. Mittels einem Elektromagneten (13), dessen Spule (14) auf einem Spulenkörper (15) gewickelt ist, welcher auf einem der Schenkel eines der Teiljochs (4, 5) angeordnet ist, kann ein zusätzliches Magnetfeld im Joch erzeugt werden, das je nach Richtung des Stromflusses in der Spule (14) das vom Dauermagneten erzeugte Magnetfeld entweder unterstützt oder hemmt. Mit dem rotationssymmetrisch ausgeführten Wegmessstück ist das Ausgangssignal von magnetfeldabhängigen Schaltungselementen (7, 8) unabhängig von der Drehstellung des Wegmessstückes in Querrichtung zu seiner Längsachse. Mit dem Elektromagneten (13) kann mittels einer kleinen Spule mit nur einer geringen Ampère-Windungszahl die temperaturabhängige Induktionsänderung des Dauermagneten (1) ausgeglichen werden.

## Beschreibung

Die vorliegende Erfindung bezieht sich auf einen analogen Weggeber gemäss dem Oberbegriff des Patentanspruches 1.

Ein derartiger Weggeber ist in der DE-OS 1 673 938 beschrieben. Darin ist die funktionelle Abhängigkeit einer elektrischen Ausgangsgrösse an einem magnetfeldabhängigen Halbleiterschaltungselement unter anderem durch die geometrische Form eines in die Kraftlinien eines Luftspaltes tauchenden Körpers festgelegt. Die Führung des Körpers während seiner Verschiebung in oder aus dem Luftspalt erfordert in der bekannten Ausführung eine hohe Präzision. Bereits kleine Verkantungsfehler führen in Folge der gegebenen geometrischen Form des Körpers zu nicht unwesentlichen Magnetflussänderungen, ohne dass dabei gleichzeitig eine Längsverschiebung des Körpers in oder aus dem Luftspalt vorhanden sein muss. Jegliches Verkanten des Körpers führt zu einem Fehler in der Ausgangsgrösse des magnetfeldabhängigen Halbleiterschaltungselementes und damit zu einem Fehler in der Weganzeige.

Die bekannte Ausführung umfasst als Kraftlinienquelle einen Dauermagneten. Es ist bekannt, dass diese Magnetart üblicherweise einen negativen Temperaturkoeffizienten aufweist. D.h., mit steigender Temperatur nimmt die Induktion ab. Dadurch hängt die Ausgangsgrösse des magnetfeldabhängigen Halbleiterschaltungselementes ebenfalls von der Umgebungstemperatur des Weggebers ab. In der genannten Schrift wird zwar erwähnt, dass anstelle des Dauermagneten auch ein Elektromagnet verwendet werden könnte. Mit einem solchen liesse sich die Temperaturabhängigkeit des Weggebers durch eine geeignete Anpassung des Erregerstromes in der Spule des Elektromagneten an die Umgebungstemperatur beseitigen. Berechnungen und Versuche haben gezeigt, dass zum Erreichen einer erforderlichen Induktion die Spule eines Elektromagneten in Folge der notwendigen Ampère-Windungszahl nicht beliebig klein gewählt werden kann. Das Volumen des Weggebers wird bei der Verwendung eines Elektromagneten anstelle eines Dauermagneten erheblich grösser, was sich im Zuge der heute allgemein üblichen Miniaturisierung im Elektronik- und Messsektor als nachteilig auswirkt.

Man hat sich das Ziel gesetzt, einen analogen Weggeber zu schaffen, dessen Ausgangssignal unabhängig von den vorgenannten Störgrössen, Verkantung eines Körpers und/oder Umgebungstemperaturschwankungen ist. Insbesondere ist es die Aufgabe der vorliegenden Erfindung, einen analogen Weggeber zu schaffen, bei dem die Drehstellung eines in den Kraftlinienfluss eines Luftsspaltes eintauchbaren Körpers quer zu seiner Verschiebeachse keinen Einfluss auf das Ausgangssignal eines magnetfeldabhängigen Schaltungselementes hat.

Es wird in diesem Zusammenhang auf die parallele Anmeldung EP ..... verwiesen, bei der es insbesondere Aufgabe der Erfindung ist, einen analogen Weggeber zu schaffen, dessen Ausgangssignal unabhängig von Umgebungstemperaturschwankungen ist. Bei diesem Weggeber soll die Baugrösse im wesentlichen derjenigen entsprechen, die durch den Einsatz eines Dauermagneten erzielt wird.

Die Aufgabe der vorliegenden Erfindung wird mit einem analogen Weggeber gelöst, der die im kennzeichnenden Teil des Patentanspruches 1 aufgeführten Merkmale aufweist.

Dadurch, dass das Wegmessstück als rotationssymmetrischer Bauteil ausgeführt ist, ändert sich der Kraftlinienfluss im Luftspalt beim Aendern der Drehstellung des Wegmessstückes in Querrichtung zu seiner Längsachse nicht. Die geometrische Lage des Wegmessstückes innerhalb des Luftspaltes ist ebenfalls in weiten Grenzen ohne Einfluss auf den Kraftlinienfluss. Das Wegmessstück kann beispielsweise näher an der einen Stirnfläche oder näher an der anderen Stirnfläche des den Luftspalt bildenden Jochs liegen.

Je nach der Funktion, welcher die stetige Zunahme der Querschnittsfläche bzw. des Durchmessers des Wegmessstückes vom Bereichsanfang bis zum Bereichsende gehorcht, ob einer linearen Funktion oder beispielsweise einer quadratischen Funktion, kann erreicht werden, dass das Ausgangssignal des magnetfeldabhängigen Schaltungselementes ebenfalls in einer gewünschten Art, beispielsweise linear zur Eindringtiefe des Wegmessstückes in den Luftspalt ändert. Versuche haben dabei gezeigt, dass eine absolut stetige Aenderung der Querschnittsfläche des Wegmessstückes im Messbereich nicht notwendig ist, um eine bestimmte gewünschte Funktion des Ausgangssignales des magnetfeldabhängigen Schaltungselementes zu erhalten. Es genügt, wenn der Messbereich des Wegmessstückes in endliche Teilbereiche unterteilt ist, wobei jeder der Teilbereiche zum vorangehenden Teilbereich bzw. zum nachfolgenden Teilbereich eine abweichende Konizität aufweist. Die gewünschte geometrische Form des Messbereiches wird durch eine genügende Anzahl Teilbereiche approximiert, wobei in jedem Teilbereich der Durchmesser der Querschnittsfläche vom Anfang bis zum Ende des entsprechenden Teilbereiches stetig linear zunimmt. Mit diesem Vorgehen, das in der Detailbeschreibung noch näher beschrieben ist, kann auf relativ einfache Weise die geometrische Form des Messbereiches des Wegmessstückes für ein gewünschtes Ausgangssignal des magnetfeldabhängigen Schaltungselementes in Funktion des Weges erhalten werden.

Indem an den Bereichsanfang und an das Bereichsende je ein zylinderförmiger Zapfen angeschlossen ist, kann erreicht werden, dass der Streufluss der Kraftlinien im Luftspalt insbesondere bezüglich der sich rechtwinklig zur Längsachse des Wegmessstückes erstreckenden Stirnseiten des Jochs etwa immer gleich ist. Unstetigkeiten des Signales des magnetfeldabhängigen Schaltungselementes, vor allem am Anfang des Messbereiches und am Ende des Messbereiches, können dadurch vermieden werden.

Durch das Anordnen eines Führungskörpers im Luftspalt und dem Anbringen einer durchgehenden Oeffnung durch den Führungskörper, derart, dass dieser die Kraftlinien vorzugsweise rechtwinklig schneidet, sowie durch das Einbetten des Wegmessstückes in einen stabförmigen weiteren Körper, kann eine optimale Führung des Wegmessstückes im Luftspalt dann erzielt werden, wenn die Oeffnung eine zylindrische Bohrung und der stabförmige weitere Körper ein zylindrischer Stab ist, wobei der Durchmesser der Bohrung und der Aussendurchmesser des Stabes so aufeinander abgeglichen sind, dass der Stab gleitend in der Bohrung verschiebbar ist.

Eine einfache Kompensation der Induktionsänderung des Dauermagneten in Folge von Temperaturschwankungen kann dadurch erzielt werden, dass ein Elektromagnet zusätzlich angeordnet wird, derart, dass mit dessen Kraftlinien die Aenderung der Induktion des Dauermagneten bei Temperaturänderungen ausgeglichen werden kann. Da die temperaturbedingte Induktionsänderung der handelsüblichen Dauermagnete nicht sehr gross ist, genügt für den Elektromagneten eine kleine Spule mit nur einer geringen Ampère-Windungszahl zum Ausgleichen der temperaturbedingten Induktionsänderung.

Anhand von Figuren ist die vorliegende Erfindung im folgenden beispielsweise näher beschrieben. Es zeigen
- **Fig. 1**: eine isometrische Darstellung eines Ausführungsbeispieles des erfindungsgemässen analogen Weggebers,
- **Fig. 2**: eine Vorderansicht des Weggebers gemäss der Fig. 1,
- **Fig. 3**: einen Schnitt durch den Weggeber gemäss den Linien III-III in der Fig. 2,
- **Fig. 4**: einen Schnitt durch den Weggeber gemäss den Linien IV-IV der Fig. 2, wobei Mittel zum Führen des Wegmessstückes vorhanden sind, und
- **Fig. 5**: eine graphische Darstellung zum Erläutern, wie der Verlauf des Konus im Messbereich des Wegmessstückes bestimmbar ist.

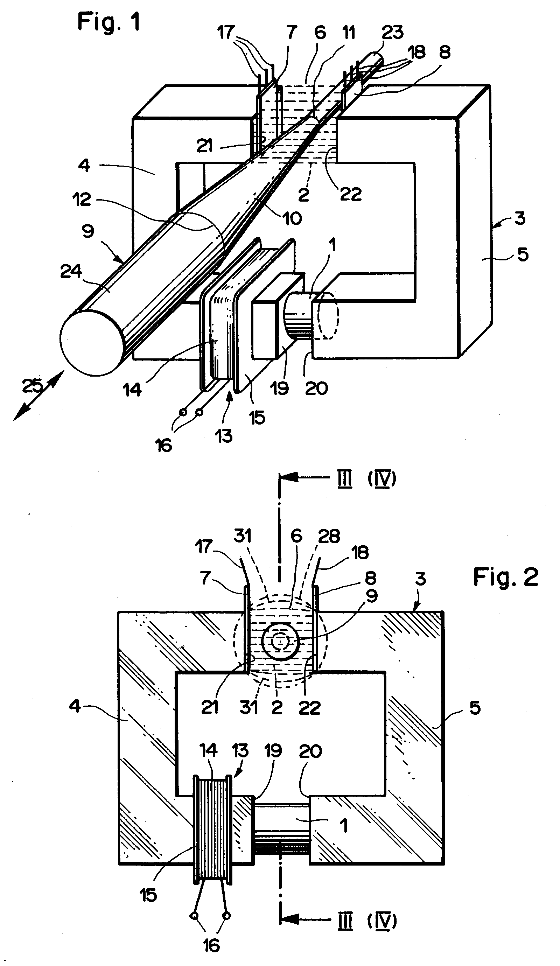

In der Fig. 1 ist mit 3 ein Joch bezeichnet, welches aus zwei Teiljochs 4, 5 gebildet ist. Jedes Teiljoch hat eine im wesentlichen U-förmige Form, wobei je die beiden Schenkel der U einander zugewandt sind. Zwischen einer ersten Stirnfläche 19 des einen Schenkels vom ersten Teiljoch 4 und einer ersten Stirnfläche 20 des einen Schenkels vom zweiten Teiljoch 5, ist ein Dauermagnet 1, beispielsweise in der Gestalt eines Scheibenmagnetes oder in der Gestalt eines Quadermagnetes angeordnet. Zwischen einer zweiten Stirnfläche 21 des anderen Schenkels des ersten Teiljochs 4 und einer zweiten Stirnfläche 22 des anderen Schenkels des zweiten Teiljochs 5 befindet sich ein Luftspalt 6. Je nach Polarisation des Dauermagneten 1 fliesst ein Magnetfluss, der durch Kraftlinien 2 dargestellt ist und der durch die Induktion des Dauermagneten 1 erzeugt wird, durch das Joch 3 von der zweiten Stirnfläche 21 zur zweiten Stirnfläche 22, oder umgekehrt, über den Luftspalt 6.

An der zweiten Stirnfläche 21 und an der zweiten Stirnfläche 22 des ersten und des zweiten Teiljochs 4, 5 ist je ein magnetfeldabhängiges Schaltungselement 7, 8 angeordnet.

Magnetfeldabhängige Schaltungselemente können, wie in der Figur dargestellt, Halleffektsensoren sein, die von einem Strom durchflossen sind und eine Spannung dann abgeben, wenn senkrecht zur Stromrichtung ein Magnetfeld einwirkt. Die Richtung der Spannung ist von der Richtung des Stromes und von der Richtung des Magnetfeldes abhängig. Es wäre jedoch auch denkbar, anstelle der Halleffektsensoren Permaloy-Sensoren zu verwenden. Permaloy ist eine Nickel/Eisen-Legierung, deren Widerstand sich bei Magnetfeldänderungen verändert. Das Betätigungsprinzip ist ähnlich wie bei Halleffektsensoren. Permaloy-Sensoren sind jedoch von einer Polarisation unabhängig.

Durch das Anordnen von zwei Halleffektsensoren 7, 8 kann durch eine geeignete Schaltung derselben eine Verdoppelung des Ausgangssignales erreicht werden. Es ist dabei zu beachten, dass sich in diesem Fall auch der Einfluss der eingangs genannten Störgrössen verdoppeln könnten. Die Wichtigkeit, dass diese gar keine Wirkung entfalten können, wird hier deutlich sichtbar.

Die beiden Halleffektsensoren 7, 8 weisen je drei elektrische Anschlüsse, die mit 17 und 18 gekennzeichnet sind, auf.

Es wäre durchaus möglich, nur einen Halleffektsensor zu verwenden. Dieser oder auch der zweite Halleffektsensor, könnte in Abweichung zur Fig. 1 auch an einer anderen Stelle innerhalb und längs des durch das Joch 3 vorgegebenen Weges für den Magnetfluss 2 angeordnet sein. Der in der Fig. 1 gewählte Ort hat sich bezüglich der Einfachheit bei der Montage als bevorzugt herausgestellt.

Mit 13 ist ein Elektromagnet gekennzeichnet. Dieser umfasst eine Spule 14 mit zwei Anschlüssen 16. Die Spule 14 ist auf einen Spulenkörper 15 gewickelt. Der letztere ist beispielsweise auf den einen Schenkel des ersten Teiljochs 4 aufgeschoben. Durch das Beaufschlagen der Spule 14 mit einem Strom in der einen oder in der anderen Richtung, kann der durch den Dauermagneten 1 erzeugte Magnetfluss unterstützt oder gehemmt werden. Mit einer relativ kleinen Spule ist es möglich, lediglich die temperaturbedingte Magnetflussänderung des Dauermagneten 1 auszugleichen, derart, dass im Luftspalt 6 unabhängig von der Umgebungstemperatur eine konstante Anzahl der Kraftlinien 2 vorhanden ist.

Selbstverständlich könnte der Wickelkörper 15 auch an einem anderen als dem gezeichneten Ort angeordnet sein. Denkbar wäre auch ein längerer Wickelkörper, der sich im wesentlichen über die beiden einen Schenkel des ersten und zweiten Teiljochs 4, 5 erstrecken könnte, und der dabei den Dauermagneten 1 überdecken würde.

Mit 9 ist ein Wegmessstück gekennzeichnet. Dieses ist ein stabförmiger länglicher Bauteil, der rotationssymmetrisch hergestellt ist. Das Wegmessstück 9 weist von einem Bereichsanfang 11 bis zu einem Bereichsende 12 einen Bereich 10 auf, über welchen sich die Querschnittsfläche im wesentlichen stetig ändert. Im gezeigten Beispiel nimmt die Querschnittsfläche vom Bereichsanfang 11 bis zum Bereichsende 12 stetig zu. Der Bereich 10 ist dabei ein konischer Bereich mit einer konstanten Steigung. Ein erster Zapfen 23 und ein zweiter Zapfen 24 schliessen je auf der dem Konus abgewandten Seite an den Bereichsanfang 11 und an das Bereichsende 12 an. Die Länge des Bereiches 10 kennzeichnet etwa die Grösse des Messbereiches des analogen Weggebers. Genauer ist der Messbereich weiter hinten erklärt.

Mit 25 ist die Verschieberichtung des Wegmessstückes 9 angedeutet, die im wesentlichen rechtwinklig zur Richtung der Kraftlinien 2 erfolgt. Die Längsachse des Wegmessstückes 9 verläuft vorzugsweise durch die Mitte des Luftspaltes 6.

In der Fig. 2 ist eine Vorderansicht des in der Fig. 1 bereits beschriebenen analogen Weggebers gezeigt. Beim Luftspalt 6 sind mit dem Bezugszeichen 31 Kraftlinien eines Streuflusses dargestellt, welche in der gezeichneten Figur oben und unten ausserhalb des Luftspaltes 6 verlaufen. "Oben" bedeutet ausserhalb der vom Dauermagneten 1 abgewandten Seite des Luftspaltes 6 und "Unten" bedeutet ausserhalb der dem Dauermagneten 1 zugewandten Seite des Luftspaltes 6. Die Befestigung der magnetfeldabhängigen Schaltungselemente 7 und 8 an den zweiten Stirnflächen 21, 22 des ersten bzw. des zweiten Teiljochs 4, 5 kann vorzugsweise durch je eine Klebstelle erfolgen. Die Anordnung des Dauermagneten 1 zwischen den ersten Stirnflächen 19, 20 des ersten bzw. des zweiten Teiljochs 4, 5 kann ebenfalls mittels Klebstellen verwirklicht werden. Es ist aber auch denkbar, die beiden Teiljochs mittels einer in den Figuren nicht gezeichneten Spannvorrichtung zusammenzuhalten.

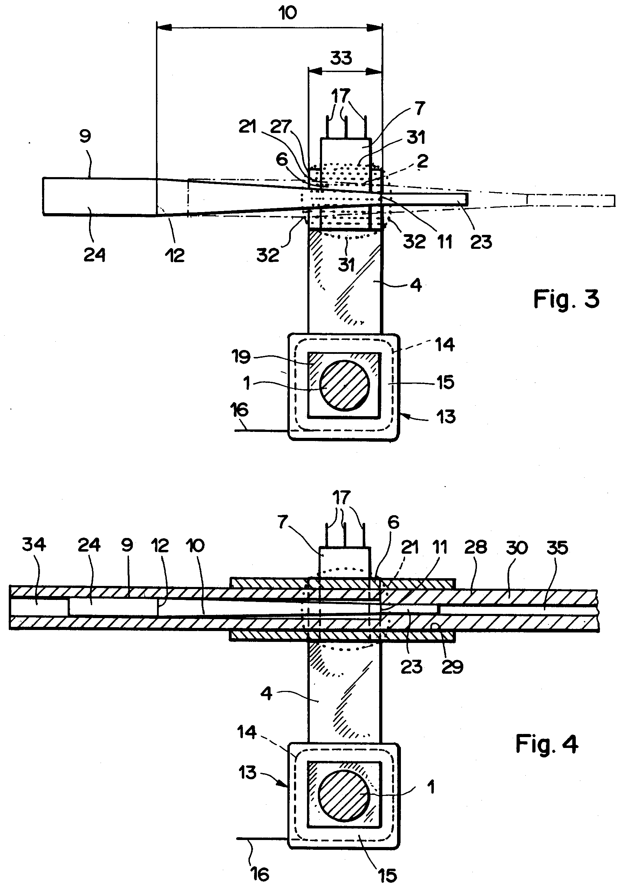

In der Fig. 3 ist ein Schnitt durch den analogen Weggeber entlang den Linien III-III der Fig. 2 gezeigt. Das Wegmessstück 9 ist ausgezogen in der Anfangsstellung des Messbereiches und gestrichelt in der Endstellung des Messbereiches gezeigt. Die Anfangsstellung des Messbereiches ist derart, dass der Bereichsanfang 11 des Bereiches 10 des Wegmessstückes 9 etwa bündig mit der einen durch das Joch 3 aufgespannten Luftspaltendfläche liegt, die sich im wesentlichen rechtwinklig zur Längsachse des Wegmessstückes 9 erstreckt. Der erste Zapfen 23, der sich auf der dem Bereich 10 abgewandten Seite des Bereichsanfanges 11 befindet, liegt dabei ausserhalb des Luftspaltes 6. Der Messbereich des analogen Weggebers erstreckt sich soweit, bis das Bereichsende 12 des Bereiches 10 bündig mit der anderen, durch das Joch 3 aufgespannten Luftspaltendfläche liegt, die sich im wesentlichen rechtwinklig zur Längsachse des Wegmessstückes erstreckt. Der zweite Zapfen 24 des Wegmessstückes ragt beim Erreichen dieses Zustandes nicht in den Luftspalt 6 hinein.

Wie aus der Fig. 3 ersichtlich ist, ist der Längenmessbereich des analogen Weggebers nicht genau durch die Distanz zwischen dem Bereichsanfang 11 und dem Bereichsende 12 des Wegmessstückes 9 bestimmt. Der Messbereich entspricht der vorgenannten Distanz abzüglich der mit 33 bezeichneten Jochtiefe.

Mit 32 ist ein weiterer Streufluss gezeichnet, dessen Kraftlinien ausserhalb des Luftspaltes 6 verlaufen. Sie übertreten die vorgenannten Luftspaltendflächen. Dadurch, dass sich der konische Bereich 10 nicht zu einer Spitze erstreckt und der Anfang des Messbereiches nicht so definiert ist, dass die Spitze mit der einen der vorgenannten Luftspaltendflächen bündig ist, sondern dass dafür gesorgt ist, dass sowohl am Anfang als auch am Ende des Messbereiches je ein Teil des Wegmessstückes 9, der Zapfen 23 bzw. der Zapfen 24, ausserhalb des Luftspaltes 6 liegt, ändert sich der Streufluss 32 beim Durchschieben des Wegmessstückes 9 durch den Luftspalt 6 vom Anfang bis zum Ende des Messbereiches und umgekehrt nur unmerklich. Das Ausgangssignal des oder der magnetabhängigen Schaltungselemente 7, 8 wird durch keine Streuflussänderung störend beeinflusst.

Die Fig. 4 zeigt den gleichen Schnitt des analogen Weggebers wie die Fig. 3. Im Luftspalt 6 ist ein Körper 28 angebracht, der zum Führen des Wegmessstückes 9 bestimmt ist. Der längliche Körper 28 ist vorzugsweise zylinderförmig ausgeführt und weist eine durchgehende Längsbohrung 29 auf. Diese erstreckt sich rechtwinklig zu den Kraftlinien 2 in der Durchschieberichtung des Wegmessstückes 9 durch den Luftspalt. Im Bereiche der beiden den Luftspalt 6 begrenzenden zweiten Stirnflächen 21, 22, wovon in der Fig. 4 nur eine 21 sichtbar ist, bzw. im Bereiche der beiden magnetfeldabhängigen Schaltungselemente 7, 8, wovon in der Fig. 4 nur das eine 7 sichtbar ist, weist der zylindrische Körper 28 Planfräsungen auf, die so ausgeführt sind, dass entsprechende Flächenanpassungen der Stirnflächen 21, 22 bzw. der Flächen der magnetfeldabhängigen Schaltungselemente 7, 8 an die Mantelseite des Körper 28 gegeben sind.

Damit das Wegmessstück 9 in der Bohrung 29 führbar ist, ist es vorzugsweise in einen stabförmigen weiteren Körper 30 eingebettet. Dieser weist zur Aufnahme des Wegmessstückes 9 eine durchgehende Bohrung 34, 35 auf, welche abgesetzt ist. Der Durchmesser des Bohrungsteiles 34 entspricht im wesentlichen dem Durchmesser des zweiten Zapfens 24 und der Durchmesser des Bohrungsteiles 35 ist im wesentlichen gleich dem Durchmesser des ersten Zapfens 23. Das Wegmessstück 9 lässt sich dann von der grösseren der Bohrungen 34 her in den weiteren Körper so weit einschieben, bis der Bereichsanfang 11 am Ende des Bohrungsteiles 34 bzw. am Anfang des Bohrungsteiles 35 liegt. Mittels einem Klebstoff kann das Wegmessstück 9 im weiteren Körper 30 befestigt werden. Der letztere ist vorzugsweise zylinderförmig derart ausgeführt, dass er gleitend in der Bohrung 29 des Führungskörpers 28 hin- und herbewegbar ist.

Es braucht kaum erwähnt zu werden, dass die beiden Teiljochs 4, 5 des Jochs 3 und das Wegmessstück 9 je aus einem weichmagnetischen Wirkstoff hergestellt sind. Selbstverständlich können das Joch und der Querschnitt des Jochs auch eine von der in den Figuren gezeigten rechteckigen Form abweichende Gestaltung aufweisen. Der Führungskörper 28 und der stabförmige weitere Körper 30 sind hingegen aus einem nichtmagnetischen Werkstoff, beispielsweise aus Kunststoff oder aus Leichtmetall gefertigt.

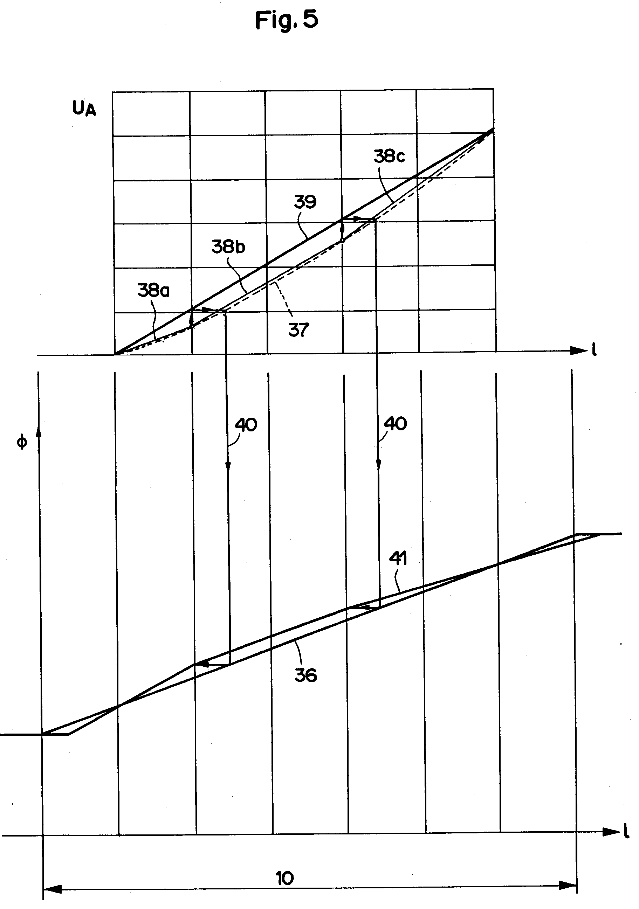

In der Fig. 5 ist der Vorgang graphisch dargestellt, wie die geometrische Form des Bereiches 10 des Wegmessstückes 9 ermittelt werden kann, um einen bestimmten Verlauf des Ausgangssignales des oder der magnetfeldabhängigen Schaltungselemente in Funktion des Durchdringweges des Wegmessstückes 9 durch den Luftspalt 6 zu erhalten. Ausgehend von einem Wegmessstück, dessen Bereich 10 einen Konus mit einer konstanten Steigung aufweist (Kurve 36 in der unteren Grafik, bei der der Durchmesser des Bereiches 10 des Wegmessstückes in Funktion zur Bereichslänge aufgetragen ist), wird das Ausgangssignal (Kurve 37 in der oberen Grafik), des oder der magnetfeldabhängigen Schaltungselemente in Funktion der Durchdringtiefe des Wegmessstückes durch den Luftspalt aufgenommen. Die gemessene Kennlinie 37 wird durch eine genügende Anzahl von Geraden 38a, 38b und 38c approximiert. Eine Gerade 39 in der oberen Grafik zeigt das gewünschte Ausgangssignal U_{A} des oder der magnetfeldabhängigen Schaltungselemente in Funktion der Stellung des Wegmessstückes 9. Mittels Uebertragungslinien 40 werden ausgehend von der Geraden 39 Korrekturwerte an den gemeinsamen Schnittpunkten von je zwei Geraden 38a, 38b mit der Kennlinie 37 bzw. 38b, 38c mit der Kennlinie 37 auf den Konus (Kurve 36) des Wegmessstückes übertragen. Eine Kurve 41, welche die geometrische Form eines korrigierten Konus darstellt, mit welchem das im gezeigten Beispiel gewünschte linear zunehmende Ausgangssignal (Gerade 39) erhalten werden kann, kann ermittelt werden. Anhand der Kurve 41 sind die Durchmesser des Bereiches 10 an jeder beliebigen Stelle festgelegt bzw. es können aus der Kurve 41 die Steigungen für jeden der Teilbereiche des Bereiches 10 des Wegmessstückes 9 ermittelt werden. Die Durchmesserzunahme bzw. die Zunahme der Querschnittsfläche des Bereiches 10 vom gereichsanfang bis zum Bereichsende ist dann nicht mehr absolut stetig. Wie bereits in der Beschreibungseinleitung erwähnt, wird dadurch jedoch das Messresultat nicht störend verfälscht. Für das in der Fig. 5 dargestellte Beispiel wird der analoge Weggeber zu einem analogen Linearweggeber.

## Patentansprüche

1. Analoger Weggeber mit wenigstens einem Magnet (1), dessen Kraftlinien (2) durch ein Joch (3) über mindestens einen Luftspalt (6) und durch mindestens ein magnetfeldabhängiges Schaltelement (7, 8) geführt sind, das eine elektrische Ausgangsgrösse hat, deren Wert durch ein den Luftspalt beeinflussendes Wegmessstück (9) bestimmt ist, dadurch gekennzeichnet, dass das Wegmessstück (9) ein etwa rechtwinklig zu den Kraflinien (2) durch den Luftspalt (6) hindurch verschiebbarer, stabförmiger und bezüglich seiner Längsachse rotationssymmetrischer Bauteil ist, welcher über einen bestimmten Bereich (10), von einem Bereichsanfang (11) bis zu einem Bereichsende (12), eine im wesentlichen stetig ändernde Querschnittsfläche aufweist.

2. Analoger Weggeber nach Anspruch 1, dadurch gekennzeichnet, dass der Messbereich des Weggebers im wesentlichen gleich der Distanz vom Bereichsanfang (11) bis zum Bereichsende (12) des Wegmessstückes (9) ist.

3. Analoger Weggeber nach Anspruch 2, dadurch gekennzeichnet, dass die Querschnittsfläche des Wegmessstückes vom Bereichsanfang (11) bis zum Bereichsende (12) im wesentlichen stetig zunimmt.

4. Analoger Weggeber nach einem der Ansprüche 1 bis 3, dadurch gekennzeichnet, dass das Wegmessstück anschliessend an den Bereichsanfang (11) auf der dem Bereichsende (12) abgewandten Seite einen im wesentlichen zylinderförmigen ersten Zapfen (23) und anschliessend an das Bereichsende (12) auf der dem Bereichsanfang (11) abgewandten Seite, einen im wesentlichen zylinderförmigen zweiten Zapfen (24) aufweist.

5. Analoger Weggeber nach Anspruch 4, dadurch gekennzeichnet, dass die Querschnittsfläche des ersten Zapfens (23) höchstens gleich der Querschnittsfläche des Wegmessstückes (9) beim Bereichsanfang (11) und die Querschnittsfläche des zweiten Zapfens (24) wenigstens gleich der Querschnittsfläche des Wegmessstückes (9) beim Bereichsende (12) ist.

6. Analoger Weggeber nach Anspruch 4 oder 5, dadurch gekennzeichnet, dass am Anfang des Messbereiches (10) der Bereichsanfang (11) in der Verschieberichtung (25) des Wegmessstückes (9) mit dem einen Ende (26) des Luftspaltes im wesentlichen bündig ist, und dass am Ende des Messbereiches (10) das Bereichsende (12) mit dem anderen Ende (27) des Luftspaltes im wesentlichen bündig ist, wobei sowohl der erste als auch der zweite Zapfen (23, 24) immer im wesentlichen ausserhalb des Luftspaltes (7) gelegen sind.

7. Analoger Weggeber nach einem der Ansprüche 1 bis 6, dadurch gekennzeichnet, dass im Luftspalt (7) ein Körper (28) aus einem nichtmagnetischen Werstoff mit einer etwa quer zu den Kraftlinien verlaufenden Oeffnung (29) zum Führen des Wegmessstückes (9) angordnet ist.

8. Analoger Weggeber nach Anspruch 7, dadurch gekennzeichnet, dass das Wegmessstück (9) in einen stabförmigen weiteren Körper (30) eingebaut ist, wobei die Aussenabmessungen des weiteren Körpers (30) derart sind, dass dieser in der Führungsöffnung (29), im wesenlichen einen Schiebesitz bildend, längsverschiebbar ist.

9. Analoger Weggeber nach einem der Ansprüche 1 bis 8, dadurch gekennzeichnet, dass der wenigstens eine Magnet ein Dauermagnet (1) ist, dass ein zweiter Magnet (13) derart angeordnet ist, dass sich dessen Kraftlinien zu den vom wenigstens einen Magneten (1) erzeugten Kraftlinien überlagern, und dass der zweite Magnet ein Elektromagnet (13) ist.

10. Analoger Weggeber nach Anspruch 9, dadurch gekennzeichnet, dass die Spule (14) des Elektromagneten (13) derart mit einem veränderbaren Strom beaufschlagbar ist, dass der durch die beiden Magnete (1, 13) erzeugte resultierende Magnetfluss unabhängig von vorhandenen Temperaturschwankungen ist.
